# EUROPEAN PATENT SPECIFICATION

(11) **EP 2 487 666 B1**
(45) Date of publication and mention of the grant of the patent: **18.12.2019**
(21) Application number: 12152028.2
(22) Date of filing: 23.01.2012
(51) Int. Cl.: G08G 1/16, B60R 1/12, H04N 7/18

(54) **Method and driver assistance system for displaying images in a motor vehicle**
Verfahren und Fahrerassistenzsystem zum Anzeigen von Bildern in einem Kraftfahrzeug
Procédé et système d'assistance au conducteur pour l'affichage d'images dans un véhicule à moteur

(30) Priority: 10.02.2011 DE 102011010860
(43) Date of publication of application: 15.08.2012
(73) Proprietor: Connaught Electronics Ltd., Tuam, County Galway (IE)
(72) Inventor: Denny, Patrick Eoghan, Roscam, County Galway (IE)
(74) Representative: Jauregui Urbahn, Kristian

(56) References cited:
- DE-A1-102008 064 361
- DE-A1-102010 015 079
- US-A1- 2004 260 469
- US-A1- 2010 283 591
- US-B1- 7 161 616

## Description

The invention relates to a method for displaying images on a display means in a motor vehicle. A vehicle image of at least one region of the motor vehicle is provided. At least one camera of the motor vehicle captures an image of an environment of the motor vehicle. An overall image is displayed on the display means, which is formed from the vehicle image and the image of the environment. The overall image includes at least one blind region associated with the environment, to which image data is not present. The invention in addition relates to a driver assistance system for performing such a method as well as a motor vehicle including such a driver assistance system.

It is prior art to display images on a display means of a motor vehicle, which present the motor vehicle on the one hand and its environment on the other hand. Presently, the interest is in particular in a plan view of the motor vehicle and its environment (also known under the designation "bird view"). An image presenting such a plan view can be produced by processing image data of a camera - or a plurality of cameras. Usually, image data of a plurality of cameras is processed for this, which are attached to the body of the motor vehicle. Then, an overall image is displayed on the display means, which shows a plan view of the motor vehicle - a vehicle image is usually already stored in advance - and its environment - the image of the environment is produced from the camera data.

For capturing the image data, for example, four cameras can be employed: a camera on the front bumper, one on the rear bumper, one on the left and one on the right lateral flank of the vehicle. Therein, regions in the environment of the vehicle exist, which cannot be captured by the cameras. In particular, the rounded corner regions of the motor vehicle cannot be captured, as also optionally a near region immediately following the exterior surface of the vehicle. Thus, image data to these regions does not exist, and a realistic image to these regions cannot be presented on the display means. In the prior art, this difficulty is countered in that these blind regions of the environment, to which image data is not present, are represented in black in the displayed image. Thus, any information to the blind regions is not presented at all to the driver, and therefore he also does not know whether or not objects or obstacles are located in these regions of the environment.

As is known, additionally, the vehicle image can be represented distorted in the overall image such that the vehicle image covers the blind regions of the environment in the displayed overall image. For example, the vehicle image is represented with an enlarged scale with respect to the environment. In this manner, it can be pretended to the driver that the distance of objects located in the environment to the motor vehicle is smaller than the actual distance such that the risk of collision is reduced.

In the subject matter according to printed matter EP 1 179 958 A1, the blind regions of the environment besides the motor vehicle or else an enlarged region of the environment besides the motor vehicle are represented in terms of color. Thus, the driver is allowed to easier discern the blind regions, to which image data is not present, than with black blind regions.

US 7 161 616 B1 discloses a synthetic image viewed from a virtual point of view above a vehicle where the area around the vehicle that is not shot by any of the cameras is displayed as a blind spot region.

US 2010/0283591 A1 discloses a method for informing the driver of a motor vehicle via a driver information system with a display unit. It displays the motor vehicle having the driver information system as a graphical representation with or without an aura representation surrounding the graphical representation depending on an immediate danger.
It is the object of the invention to demonstrate a solution, how in a method of the initially mentioned type, the at least one blind region, to which image data of the camera is not present, can be utilized in particularly reasonable manner, wherein the risk of collision is in particular to be reduced to a minimum.

According to the invention, this object is solved by a method having the features according to claim 1 as well as by a driver assistance system having the features according to claim 14 as well as by a motor vehicle having the features of claim 15.

Advantageous implementations of the invention are the subject matter of the dependent claims and of the description.

A method according to the invention is adapted to display images on a display means in a motor vehicle. A vehicle image of at least one region of the motor vehicle is provided - this vehicle image can for example already be stored in advance in a storage means. An image of an environment of the motor vehicle is captured with at least one camera of the motor vehicle. An overall image is displayed on the display means, which is formed from the vehicle image and the image of the environment - like by superposition. The overall image includes at least one blind region associated with the environment, to which image data is not present. According to the invention, it is provided that an object external to vehicle is detected based on sensor data of at least one sensor of the motor vehicle, and the at least one blind region is represented in the overall image considering the detected object.

Thus, a central idea of the invention is to use the blind region present in the overall image to inform the driver on the presence of the object detected - and optionally not yet represented in the overall image - or on the risk associated therewith. Therefore, the at least one blind region can be reasonably used by modifying its representation depending on the detected object. For example, upon realizing an object, the coloring of the blind region can be varied. With the aid of the blind region present in the overall image anyway, thus, the driver is warned about the presence of the object such that the risk of collision is also reduced to a minimum.

Preferably, the vehicle image shows the entire motor vehicle. Thus, the driver gets displayed the entire motor vehicle on the display means and can inform himself on the environment around the vehicle.

The advantages of the invention in particular completely have an effect if the vehicle image presents a plan view of the at least one region of the motor vehicle - in particular of the entire motor vehicle - and camera data of the at least one camera is processed to an image of the environment, which presents a plan view of the captured environment. Then, the plan view of the at least one region of the motor vehicle as well as of the environment is presented in the overall image. Such a plan view of the motor vehicle and the environment is particularly user friendly: thus, the driver can particularly simply infer the distances between the motor vehicle and the objects located in the environment or realize a critical situation. In such a bird's eye view, the driver can better assess the respective distances between the vehicle and any objects. Exactly then, however, the problem of the blind regions of the environment arises; namely, the camera data to some regions of the environment, which immediately follow the motor vehicle, is missing. The present invention exploits exactly this fact in that the blind regions in the displayed overall image can be utilized for representing information on the detected object.

Therefore, the object external to vehicle is detected based on sensor data of at least one sensor of the motor vehicle. In an embodiment, this detection is effected based on image data of the at least one camera as the sensor data. This means that the image data of the at least one camera can also be used to detect the object external to vehicle. In this embodiment, in particular the employment of an additional sensor with the disadvantages associated therewith with respect to the cost and the valuable installation space is unnecessary.

Additionally or alternatively, it can be provided that the detection of the object is effected based on sensor data of a sensor different from the camera. For example, an ultrasonic sensor and/or a radar device and/or a laser scanner and/or an infrared sensor can be used here as the sensor. It proves particularly advantageous if a sensor of a driver assistance system anyway present in the motor vehicle is used for detection of the object, such as an ultrasonic sensor of a parking assistance system. If a sensor different from the camera is used for detecting the object, thus, the object can be captured with a relatively high accuracy and the distance of the object and/or its relative velocity and/or its direction of movement can be highly precisely measured.

Preferably, in the overall image, at least two blind regions are present, to which image data of the camera is not present, namely in particular a blind region to the right of the motor vehicle - such as in the front right corner region and/or in the rear right corner region - and a blind region to the left of the motor vehicle - such as in the front left corner region and/or in the rear left corner region of the motor vehicle. If an object external to vehicle is detected, thus, that blind region can exclusively be represented considering the object - for example optically highlighted, in particular in color, with respect to the other blind region - which is nearest to the detected object. If for example an object is detected on the right side of the motor vehicle, thus, the right blind region can be represented depending on the realized object; here, for example, the coloring of the right blind region can be varied.

As already explained, a coloring of the blind region in the overall image can be adjusted considering the object. By the variation of the coloring of the blind region, the driver is allowed to reliably perceive this blind region and thus the presence of the object in the environment.

The following approach proves particularly advantageous: A degree of risk is determined as a measure of the risk of collision between the motor vehicle and the detected object. Depending on the degree of risk, then, the at least one blind region is represented in the overall image. Based on the degree of risk, the objects located in the environment of the motor vehicle can be virtually classified, and the at least one blind region can be represented considering this classification. Thus, with the aid of the overall image, information is conveyed to the driver on whether or not the objects external to vehicle actually present a risk.

Depending on the degree of risk, for example, coloring of the blind region in the overall image can be varied. For a relatively high degree of risk, for example, a red coloring can be provided, while a yellow one can be provided for a medium risk and a green coloring can be provided for a relatively low risk. Thus, the actual risk can particularly fast be seen by the driver or the driver can assess the situation in the environment based on the overall image.

Preferably, the degree of risk is determined considering a relative velocity of the object with respect to the own motor vehicle and/or considering a distance of the object to the motor vehicle and/or considering a relative direction of movement of the object with respect to the motor vehicle. Depending on these quantities, the degree of risk can be realistically determined.

For example, a time to collision is determined as the degree of risk, thus, that time the object presumably takes to reach the motor vehicle or to collide with the motor vehicle. The quantity "time to collision" uniquely represents the actual risk and therein can be utilized and processed without much effort.

Based on the sensor data, the detected object can also be tracked with respect to time, and the blind region can be represented in the overall image considering the detected object even if the object enters the blind region and thus is no longer visible in the overall image. This embodiment proves in particular advantageous if the object is detected based on the image data of the camera. Namely, the object can no longer be detected based on the image data if it enters the blind region. Here, the object can be tracked based on the image data, and the respectively current position of the object relative to the motor vehicle can be assessed or the trajectory of movement of the object with respect to the motor vehicle can be extrapolated. If the object enters the blind region, thus, the blind region can for example be highlighted in the overall image with a red coloring, or a flashing blind region can be represented, the coloring of which varies with a certain frequency. Thus, it is possible to inform the driver on the risk of collision even if the object is already in the blind region and thus is no longer visible in the presented overall image.

The blind region can also particularly reasonably be utilized as follows: The blind region can be represented considering an actual operating state of at least one component of the motor vehicle, namely in particular considering and actual operating state of an indicator and/or of a brake light of the motor vehicle. This embodiment can for example be realized if an object external to the vehicle is not detected at the respectively actual time. With the overall image, then, the driver is informed on the actual operating state of the at least one component of the motor vehicle, such that the employability or the functionality of the display means is extended compared to the prior art.

The overall image can include a left blind region and a right blind region, to which image data is not present. In case of an activated left indicator, the left blind region can be optically highlighted - in particular in color - with respect to the right blind region, while in case of an activated right indicator, the right blind region can be optically highlighted - in particular in color - with respect to the left blind region. The highlighting can also be configured such that the respective blind region then flashes in the overall image or its coloring is then varied with a certain frequency if the associated indicator is activated. Thus, the driver is informed on the respectively current state of the indicators with the aid of the display means on the one hand; such an overall image is optically particularly attractive on the other hand.

The overall image can also include a blind region disposed behind the vehicle image, to which image data is not present. Then, upon activating a brake light of the motor vehicle, the representation of this rear blind region can be varied. For example, upon activating the brake light, the rear blind region in the overall image can also flash, such that the activation of the brake light is displayed on the display means. If for example two blind regions behind the vehicle image are present, namely a blind region in the rear left corner region and a blind region in the rear right corner region, thus, upon activating the brake light, both blind regions can flash. The rear blind region can for example be continuously illuminated for the period of time - for example by a corresponding coloring - for which the brake light is also activated.

According to the invention, moreover, a driver assistance system for an automobile, in particular a passenger car, is provided, which is formed for displaying images. It includes at least one camera for capturing an image of an environment of the motor vehicle as well as a computing means, in which a vehicle image of at least one region of the motor vehicle is stored, namely in particular in a storage. The computing means can produce an overall image from the vehicle image and the image of the environment, which includes at least one blind region associated with the environment, to which image data is not present. The driver assistance system also includes a display means for displaying the overall image. The computing means is adapted to represent the blind region in the overall image considering an object detected based on sensor data of at least one sensor.

A motor vehicle according to the invention includes a driver assistance system according to the invention. The preferred embodiments presented with reference to the method according to the invention and the advantages thereof correspondingly apply to the driver assistance system according to the invention as well as to the motor vehicle according to the invention.

Further features of the invention are apparent from the claims, the figures and the description of figures. All of the features and feature combinations mentioned above in the description as well as the features and feature combinations mentioned in the description of figures and/or shown in the figures alone are usable not only in the respectively specified combination, but also in other combinations or else alone.

Now, the invention is explained in more detail by way of a preferred embodiment as well as with reference to the attached drawings.

There show:
- Fig. 1: in schematic illustration a motor vehicle with a driver assistance system according to an embodiment of the invention; and
- Fig. 2: in schematic illustration an overall image, which is displayed on a display means in the motor vehicle and in which blind regions of an environment of the motor vehicle are shown.

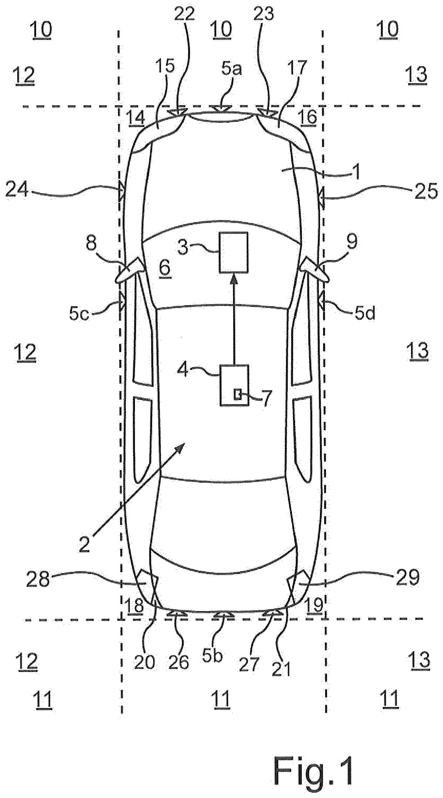

A vehicle 1, as it is illustrated in Fig. 1, is a passenger car. The motor vehicle 1 includes a driver assistance system 2, which includes a display means 3, a computing means 4 as well as four cameras 5a to 5d. The computing means 4 drives the display means 3. The cameras 5a to 5d transmit captured image data to the computing means 4, namely for example via an internal communication bus of the motor vehicle 1.

For example, the display means 3 can be an LCD display. However, it can also be a projector, with the aid of which images can be projected to the windshield 6 (head-up display).

In the computing means 4, in addition, a vehicle image is stored - and more precisely data representing an image of the motor vehicle 1 - namely in a storage 7.

The cameras 5a to 5d are disposed on an exterior surface of the motor vehicle 1. The number as well as the arrangement of the cameras 5a to 5d are only exemplarily illustrated in Fig. 1; according to embodiment, the number of the cameras 5a to 5d as well as the arrangement thereof on the motor vehicle 1 can vary. In the embodiment, a first camera 5a is disposed on a front bumper of the motor vehicle 1, while a second camera 5b is disposed on a rear bumper. A third camera 5c is mounted to the left lateral flank; it can also be integrated in a left exterior mirror 8. A fourth camera 5d is mounted to the right lateral flank, namely in the region of a right exterior mirror 9. The fourth camera 5d can also be integrated in the exterior mirror 9.

The cameras 5a to 5d each have a relatively wide capturing angle. They can be so-called fish eye cameras. For example, the respective capturing angle can be in a range of values from 170° to 190°. Alternatively, cameras with a smaller capturing angle can also be used.

As is apparent from Fig. 1, the first camera 5a captures a region 10 in front of the motor vehicle 1, while the second camera 5b captures a region 11 behind the motor vehicle 1. Correspondingly, the third camera 5c captures a region 12 to the left of the vehicle 1; the fourth camera 5d captures a region 13 to the right of the vehicle 1. Thus, the cameras 5a to 5d substantially can capture the entire environment of the motor vehicle 1 around it. However, in the environment of the vehicle 1, there exist regions, which cannot be captured by the cameras 5a to 5d. Namely, a first blind region 14 besides a front left corner region 15 of the motor vehicle 1 cannot be captured by the cameras 5a to 5d. In addition, a second blind region 16 can also not be captured by the cameras 5a to 5d, which is located besides a front right corner region 17 of the motor vehicle 1. In addition, blind regions 18, 19 exist besides a rear left corner region 20 and a rear right corner region 21 of the motor vehicle 1, respectively.

The computing means 4 can process the sensor data captured by the cameras 5a to 5d. As already explained, the image data to the capturing regions 10 to 13 exists, while image data is not present to the blind regions 14, 16, 18, 19. The computing means 4 can process the image data to an image, which presents a plan view of the environment 10 to 13 of the motor vehicle 1. Thus, the computing means 4 can produce an environmental image from the image data, which shows a plan view of the capturing regions 10 to 13.

As already explained, a vehicle image of the motor vehicle 1 is stored in the storage 7. This vehicle image too, shows the motor vehicle 1 from a bird's eye view; in other words, the vehicle image shows a plan view of the vehicle 1. The computing means 4 can produce an overall image from the environmental image and the vehicle image such that both the environment 10 to 13 and the motor vehicle 1 itself are represented from a bird's eye view in a single overall image. The computing means 4 can display this overall image on the display means 3. The thus produced image is continuously displayed on the display means 3. This means that the overall image continuously adapts to the environment of the motor vehicle 1. Namely, the image data is continuously captured by the cameras 5a to 5d. Thus, the respectively actual environment 10 to 13 is displayed in the overall image.

Thus, the overall image shows the motor vehicle 1 on the one hand as well as its environment 10 to 13 on the other hand from above the motor vehicle 1. The virtual direction of view can here for example be 90° with respect to the earth's surface or coincide with the vehicle vertical axis.

Optionally, further sensors also belong to the driver assistance system 2, namely for example ultrasonic sensors 22, 23, 24, 25, 26, 27 and/or radar devices 28, 29 and optionally also further sensors. The ultrasonic sensors 22 to 27 can for example be disposed distributed on the respective bumpers or on the lateral flanks. The radar devices 28, 29 can be disposed in the respective corner regions 20, 21 of the motor vehicle 1; for example, they can be installed behind the rear bumper. All of the sensors - the ultrasonic sensors 22 to 27 and the radar devices 28, 29 - transmit their sensor data to the computing means 4, which then processes this sensor data.

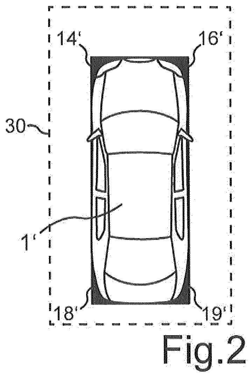

A possible overall image 30, which can be produced by the computing means 4 from the image data of the cameras 5a to 5d and the stored vehicle image, is illustrated in Fig. 2. This overall image 30 shows the vehicle image 1' as well as the environment of the motor vehicle 1. The environment can for example be displayed up to a distance of 1 m or 2 m or 3 m or 4 m or 5 m from the motor vehicle 1. As is apparent from Fig. 2, the overall image 30 includes blind regions 14', 16', 18' and 19' associated with the environment. Image data to these blind regions 14', 16', 18', 19' does not exist such that these blind regions can for example be represented in black.

In the embodiment it is provided that the blind regions 14', 16', 18', 19' are represented considering an object external to vehicle, which can for example be detected and tracked based on the following data:
- the image data of the cameras 5a to 5d and/or
- the sensor data of the ultrasonic sensors 22 to 27 and/or
- the sensor data of the radar devices 28, 29 and/or
- the sensor data of a further sensor, in particular a laser scanner and/or an infrared sensor.

It can be provided that an object external to vehicle is detected and tracked based on the image data of the cameras 5a to 5d and the result of this detection is then made plausible based on the sensor data of the ultrasonic sensors 22 to 27 and/or the radar devices 28, 29.

Thus, the computing means 4 can determine the respectively current relative position of an object with respect to the motor vehicle 1 and display the blind regions 14', 16', 18', 19' in the overall image 30 considering the object. Here, the following embodiments are provided:
That blind region 14', 16', 18', 19' can be optically highlighted with respect to other blind regions, like by a corresponding coloring, which is nearest to the detected object. If for example an object is detected in the overlapping region of the capturing regions 10 and 12 - thus to the left in front of the motor vehicle 1 - thus, the front left blind region 14' can be optically highlighted. For example, it can be marked in red, while the other blind regions 16', 18', 19' can be represented in black or with another coloring.

The computing means 4 can also determine a time to collision as a degree of risk, thus that time the object presumably takes to reach the motor vehicle 1. This time to collision can be calculated depending on a relative velocity, a distance of the object as well as its relative direction of movement with respect to the motor vehicle 1. Depending on the current time to collision, then, the blind region 14', 16', 18', 19' nearest to the object can be represented with different colorings. If the time to collision is relatively high, thus, the corresponding blind region 14', 16', 18', 19' can be represented in green. If the time to collision is relatively low, thus, this blind region 14', 16', 18', 19' can for example be represented in red. In case of a medium time to collision, a yellow mark of the blind region 14', 16', 18', 19' can be chosen.

Therein, such objects can also be taken into account, which are located either outside of the depicted environmental region or else already within the blind regions 14, 16, 18, 19. This is possible because the objects are tracked by the computing means 4 or the respectively current position of the objects with respect to the motor vehicle 1 is known.

Alternatively to the calculation of the "time to collision", the coloring of the blind regions 14', 16', 18', 19' can also be varied alone depending on the actual distance of the object and/or a relative velocity and/or the relative direction of movement.

It can also be provided that the blind regions 14', 16', 18', 19' illustrated in the overall image 30 are also represented considering the actual operating state of a component of the motor vehicle 1. For example, the computing means 4 can receive information on the respectively actual operating state of a left and a right indicator of the motor vehicle 1 and/or a rear brake light. Then, it is possible to display the respectively actual operating state of the indicators and/or of the brake light with the aid of the overall image 30 on the display means 3. If for example the left indicator is activated, thus, the left blind regions 14', 18' can also flash. This can be configured such that it is toggled between two different colorings (for example yellow and white) of the blind regions 14', 18'. By contrast, if the right indicator is activated, thus, the right blind regions 16', 19' can be represented flashing.

If the brake of the motor vehicle 1 and thus also the brake light are activated, thus, the rear blind regions 18', 19' can be optically highlighted with respect to the front ones. For example, in this case, the rear blind regions 18', 19' can be represented in red.

This indication of the actual operating state of the components of the motor vehicle 1 can for example be made if objects external to vehicle are not present in the environment 10 to 13.

## Claims

1. Method for displaying images (30) on a display means (3) in a motor vehicle (1), including the steps of:
- providing a vehicle image (1') of at least one region of the motor vehicle (1),
- capturing an image of an environment (10 to 13) of the motor vehicle (1) with at least one camera (5a to 5d) of the motor vehicle (1), and
- displaying an overall image (30) on the display means (3), which is produced from the vehicle image (1') and the image of the environment (10 to 13), wherein the overall image (30) includes at least one blind region (14', 16', 18', 19') associated with the environment (10 to 13), for which image data is not present,
**characterized by**
- detecting that an object external to the motor vehicle (1) enters said blind region (14', 16', 18', 19') based on sensor data of at least one sensor (22 to 27, 28, 29) of the motor vehicle (1) different from said camera (5a to 5d), and
- highlighting the blind region (14', 16', 18', 19') in the overall image (30) depending on the presence of the detected object.

2. Method according to claim 1,
**characterized in that**
the vehicle image (1') shows the entire motor vehicle (1).

3. Method according to claim 1 or 2,
**characterized in that**
the vehicle image (1') presents a plan view of the at least one region of the motor vehicle (1), in particular the entire motor vehicle (1), and that camera data of the at least one camera (5a to 5d) is processed to an image, which presents a plan view of the environment (10 to 13) of the motor vehicle (1), wherein the plan view of the at least one region of the motor vehicle (1) and of the environment (10 to 13) is represented in the overall image (30).

4. Method according to any one of the preceding claims,
**characterized in that**
the step of detecting the object is effected based on image data of the at least one camera (5a to 5d) as the sensor data.

5. Method according to any one of the preceding claims,
**characterized in that**
a coloring of the blind region (14', 16', 18', 19') is adjusted in the overall image (30) considering the object.

6. Method according to any one of the preceding claims,
**characterized by**
- determining a degree of risk as a measure of the risk of collision between the motor vehicle (1) and the detected object, and
- representing the blind region (14', 16', 18', 19') depending on the degree of risk.

7. Method according to claim 6,
**characterized in that**
the degree of risk is determined considering a relative velocity of the object with respect to the motor vehicle (1) and/or considering a distance of the object to the motor vehicle (1) and/or considering a relative direction of movement of the object with respect to the motor vehicle (1).

8. Method according to claim 6 or 7,
**characterized in that**
depending on the degree of risk, a coloring of the blind region (14', 16', 18', 19') in the overall image (30) is varied.

9. Method according to any one of claims 6 to 8,
**characterized in that**
a time to collision is determined as the degree of risk.

10. Method according to any one of the preceding claims,
**characterized by**
- tracking the object based on the sensor data, and
- representing the blind region (14', 16', 18', 19') in the overall image (30) considering the detected object even if the object enters the blind region (14', 16', 18', 19').

11. Method according to any one of the preceding claims,
**characterized in that**
the blind region (14', 16', 18', 19') is represented considering an actual operating state of at least one component of the motor vehicle (1), in particular an indicator and/or a brake light.

12. Method according to claim 11,
**characterized in that**
the overall image (30) includes a left blind region (14', 18') and a right blind region (16', 19'), for which image data is not present, wherein in case of an activated left indicator, the left blind region (14', 18') is highlighted with respect to the right blind region (16', 19'), and in case of an activated right indicator, the right blind region (16', 19') is highlighted with respect to the left blind region (14', 18').

13. Method according to claim 11 or 12,
**characterized in that**
the overall image (30) includes a blind region (18', 19') located behind the vehicle image (1'), for which image data is not present, wherein upon activating a brake light of the motor vehicle (1), the representation of this blind region (18', 19') is varied.

14. Driver assistance system (2) for displaying images (30), for a motor vehicle (1), including:
- at least one camera (5a to 5d) for capturing an image of an environment (10 to 13) of the motor vehicle (1),
- a computing means, in which a vehicle image (1') of at least one region of the motor vehicle (1) is stored, and which is adapted to produce an overall image (30) from the vehicle image (1') and the image of the environment (10 to 13), which includes at least one blind region (14', 16', 18', 19') associated with the environment (10 to 13), for which image data is not present, and
- a display means (3) for displaying the overall image (30), **characterized in that**
the computing means is adapted to highlight the blind region (14', 16', 18', 19') in the overall image (30) depending on the presence of an object detected in said blind region (14', 16', 18', 19') based on sensor data of at least one sensor (22 to 27, 28, 29) of said motor vehicle (1) different from said camera (5a to 5d).

15. Motor vehicle (1) including a driver assistance system (2) according to claim 14.

## Patentansprüche

1. Verfahren zum Anzeigen von Bildern (30) auf einem Anzeigemittel (3) in einem Kraftfahrzeug (1), die Schritte aufweisend:
- Bereitstellen eines Fahrzeugbildes (1') von wenigstens einem Bereich des Kraftfahrzeugs (1),
- Erfassen eines Bildes einer Umgebung (10 bis 13) des Kraftfahrzeugs (1) mit wenigstens einer Kamera (5a bis 5d) des Kraftfahrzeugs (1) und
- Anzeigen eines Gesamtbildes (30) auf dem Anzeigemittel (3), das aus dem Fahrzeugbild (1') und dem Bild der Umgebung (10 bis 13) erzeugt wird, wobei das Gesamtbild (30) wenigstens einen Blindbereich (14', 16', 18', 19'), der der Umgebung (10 bis 13) zugeordnet ist, aufweist, für den keine Bilddaten vorhanden sind, **gekennzeichnet durch**
- Erkennen, dass ein Objekt außerhalb des Kraftfahrzeugs (1) in den Blindbereich (14', 16', 18', 19') eintritt, basierend auf Sensordaten wenigstens eines Sensors (22 bis 27, 28, 29) des Kraftfahrzeugs (1), der von der Kamera (5a bis 5d) verschieden ist, und
- Hervorheben des Blindbereichs (14', 16', 18', 19') im Gesamtbild (30) in Abhängigkeit vom Vorhandensein des erkannten Objekts.

2. Verfahren nach Anspruch 1,
**dadurch gekennzeichnet, dass**
das Fahrzeugbild (1') das gesamte Kraftfahrzeug (1) darstellt.

3. Verfahren nach Anspruch 1 oder 2,
**dadurch gekennzeichnet, dass**
das Fahrzeugbild (1') eine Draufsicht des wenigstens einen Bereichs des Kraftfahrzeugs (1) darstellt, insbesondere des gesamten Kraftfahrzeugs (1), und dass Kameradaten der wenigstens einen Kamera (5a bis 5d) zu einem Bild verarbeitet werden, das eine Draufsicht der Umgebung (10 bis 13) des Kraftfahrzeugs (1) darstellt, wobei die Draufsicht des wenigstens einen Bereichs des Kraftfahrzeugs (1) und der Umgebung (10 bis 13) im Gesamtbild (30) dargestellt sind.

4. Verfahren nach einem der vorstehenden Ansprüche,
**dadurch gekennzeichnet, dass**
der Schritt des Erkennens des Objekts basierend auf Bilddaten der wenigstens einen Kamera (5a bis 5d) als Sensordaten umgesetzt wird.

5. Verfahren nach einem der vorstehenden Ansprüche,
**dadurch gekennzeichnet, dass**
eine farbliche Kennzeichnung des Blindbereichs (14', 16', 18', 19') im Gesamtbild (30) entsprechend dem Objekt angepasst wird.

6. Verfahren nach einem der vorstehenden Ansprüche, **gekennzeichnet durch**
- Bestimmen eines Risikogrades als Maß eines Kollisionsrisikos zwischen dem Kraftfahrzeug (1) und dem erkannten Objekt und
- Darstellen des Blindbereichs (14', 16', 18', 19') in Abhängigkeit vom Risikograd.

7. Verfahren nach Anspruch 6,
**dadurch gekennzeichnet, dass**
der Risikograd unter Berücksichtigung einer relativen Geschwindigkeit des Objekts bezogen auf das Kraftfahrzeug (1) und/oder unter Berücksichtigung einer Entfernung des Objekts zum Kraftfahrzeug (1) und/oder unter Berücksichtigung einer relativen Bewegungsrichtung des Objekts bezogen auf das Kraftfahrzeug (1) bestimmt wird.

8. Verfahren nach Anspruch 6 oder 7,
**dadurch gekennzeichnet, dass**
in Abhängigkeit vom Risikograd eine farbliche Kennzeichnung des Blindbereichs (14', 16', 18', 19') im Gesamtbild (30) verändert wird.

9. Verfahren nach einem der Ansprüche 6 bis 8,
**dadurch gekennzeichnet, dass**
eine Zeit bis zur Kollision als Risikograd bestimmt wird.

10. Verfahren nach einem der vorstehenden Ansprüche, **gekennzeichnet durch**
- Nachverfolgen des Objekts basierend auf den Sensordaten, und
- Darstellen des Blindbereichs (14', 16', 18', 19') im Gesamtbild (30) unter Berücksichtigung des erkannten Objekts, auch wenn das Objekt in den Blindbereich (14', 16', 18', 19') eintritt.

11. Verfahren nach einem der vorstehenden Ansprüche,
**dadurch gekennzeichnet, dass**
der Blindbereich (14', 16', 18', 19') unter Berücksichtigung eines tatsächlichen Betriebszustands wenigstens einer Komponente des Kraftfahrzeugs (1) dargestellt wird, insbesondere eines Fahrtrichtungsanzeigers und/oder einer Bremsleuchte.

12. Verfahren nach Anspruch 11,
**dadurch gekennzeichnet, dass**
das Gesamtbild (30) einen linken Blindbereich (14', 18') und einen rechten Blindbereich (16', 19') beinhaltet, für die keine Bilddaten vorhanden sind, wobei im Fall eines eingeschalteten linken Fahrtrichtungsanzeigers der linke Blindbereich (14', 18') gegenüber dem rechten Blindbereich (16', 19') hervorgehoben wird und im Fall eines eingeschalteten rechten Fahrtrichtungsanzeigers der rechte Blindbereich (16', 19') gegenüber dem linken Blindbereich (14', 18') hervorgehoben wird.

13. Verfahren nach Anspruch 11 oder 12,
**dadurch gekennzeichnet, dass**
das Gesamtbild (30) einen Blindbereich (18', 19') hinter dem Fahrzeugbild (1') beinhaltet, für den keine Bilddaten vorhanden sind, wobei bei Aktivierung einer Bremsleuchte des Kraftfahrzeugs (1) die Darstellung dieses Blindbereichs (18', 19') verändert wird.

14. Fahrerassistenzsystem (2) zum Anzeigen von Bildern (30) für ein Kraftfahrzeug (1), aufweisend:
- wenigstens eine Kamera (5a bis 5d) zum Erfassen eines Bildes einer Umgebung (10 bis 13) des Kraftfahrzeugs (1),
- ein Datenverarbeitungsmittel, in dem ein Fahrzeugbild (1') wenigstens eines Bereichs des Kraftfahrzeugs (1) gespeichert ist und das dafür ausgelegt ist, ein Gesamtbild (30) aus dem Fahrzeugbild (1') und dem Bild der Umgebung (10 bis 13) zu erzeugen, das wenigstens einen Blindbereich (14', 16', 18', 19'), der der Umgebung (10 bis 13) zugeordnet ist, aufweist, für den keine Bilddaten vorhanden sind, und
- ein Anzeigemittel (3) zum Anzeigen des Gesamtbildes (30) ,
**dadurch gekennzeichnet, dass**
das Datenverarbeitungsmittel dafür ausgelegt ist, den Blindbereich (14', 16', 18', 19') im Gesamtbild (30) in Abhängigkeit vom Vorhandensein eines erkannten Objekts im Blindbereich (14', 16', 18', 19') darzustellen, basierend auf Sensordaten wenigstens eines Sensors (22 bis 27, 28, 29) des Kraftfahrzeugs (1), der von der Kamera (5a bis 5d) verschieden ist.

15. Kraftfahrzeug (1) mit einem Fahrerassistenzsystem (2) nach Anspruch 14.

## Revendications

1. Procédé d'affichage d'images (30) sur un moyen (3) d'affichage dans un véhicule (1) à moteur, comprenant les étapes consistant à :
- fournir une image (1') de véhicule d'au moins une région du véhicule (1) à moteur,
- capturer une image d'un environnement (10 à 13) du véhicule (1) à moteur avec au moins une caméra (5a à 5d) du véhicule (1) à moteur, et
- afficher une image (30) d'ensemble sur le moyen (3) d'affichage, qui est produite à partir de l'image (1') de véhicule et de l'image de l'environnement (10 à 13), l'image (30) d'ensemble comprenant au moins une région aveugle (14' 16', 18', 19') associée à l'environnement (10 à 13), pour laquelle des données d'image ne sont pas présentes,
**caractérisé par** les étapes consistant à
- détecter qu'un objet extérieur au véhicule (1) à moteur entre dans ladite région aveugle (14', 16', 18', 19') d'après des données de capteur d'au moins un capteur (22 à 27, 28, 29) du véhicule (1) à moteur différent de ladite caméra (5a à 5d), et
- mettre en surbrillance la région aveugle (14', 16', 18', 19') dans l'image (30) d'ensemble en fonction de la présence de l'objet détecté.

2. Procédé selon la revendication 1,
**caractérisé en ce que**
l'image (1') de véhicule montre la totalité du véhicule (1) à moteur.

3. Procédé selon la revendication 1 ou 2,
**caractérisé en ce que**
l'image (1') de véhicule présente une vue en plan de la ou des régions du véhicule (1) à moteur, en particulier la totalité du véhicule (1) à moteur, et **en ce que** des données de caméra de la ou des caméras (5a à 5d) sont traitées pour donner une image, qui présente une vue en plan de l'environnement (10 à 13) du véhicule (1) à moteur, la vue en plan de la ou des régions du véhicule (1) à moteur et de l'environnement (10 à 13) étant représentée dans l'image (30) d'ensemble.

4. Procédé selon l'une quelconque des revendications précédentes,
**caractérisé en ce que**
l'étape de détection de l'objet est effectuée d'après des données d'image de la ou des caméras (5a à 5d) en tant que données de capteur.

5. Procédé selon l'une quelconque des revendications précédentes,
**caractérisé en ce que**
une coloration de la région aveugle (14', 16', 18', 19') est ajustée dans l'image (30) d'ensemble compte tenu de l'objet.

6. Procédé selon l'une quelconque des revendications précédentes, **caractérisé par** les étapes consistant à
- déterminer un degré de risque en tant que mesure du risque de collision entre le véhicule (1) à moteur et l'objet détecté, et
- représenter la région aveugle (14', 16', 18', 19') en fonction du degré de risque.

7. Procédé selon la revendication 6,
**caractérisé en ce que**
le degré de risque est déterminé compte tenu d'une vitesse relative de l'objet par rapport au véhicule (1) à moteur et/ou compte tenu d'une distance de l'objet au véhicule (1) à moteur et/ou compte tenu d'une direction relative de mouvement de l'objet par rapport au véhicule (1) à moteur.

8. Procédé selon la revendication 6 ou 7,
**caractérisé**
**en ce qu'**en fonction du degré de risque, une coloration de la région aveugle (14', 16', 18', 19') dans l'image (30) d'ensemble subit une variation.

9. Procédé selon l'une quelconque des revendications 6 à 8,
**caractérisé**
**en ce qu'**un temps jusqu'à la collision est déterminé en tant que degré de risque.

10. Procédé selon l'une quelconque des revendications précédentes, **caractérisé par** les étapes consistant à
- poursuivre l'objet d'après les données de capteur, et
- représenter la région aveugle (14', 16', 18', 19') dans l'image (30) d'ensemble compte tenu de l'objet détecté même si l'objet entre dans la région aveugle (14', 16', 18', 19').

11. Procédé selon l'une quelconque des revendications précédentes,
**caractérisé en ce que**
la région aveugle (14', 16', 18', 19') est représentée compte tenu d'un état de fonctionnement réel d'au moins un composant du véhicule (1) à moteur, en particulier un clignotant et/ou un feu de freinage.

12. Procédé selon la revendication 11,
**caractérisé en ce que**
l'image (30) d'ensemble comprend une région aveugle gauche (14', 18') et une région aveugle droite (16', 19'), pour lesquelles des données d'image ne sont pas présentes, la région aveugle gauche (14', 18') étant mise en surbrillance par rapport à la région aveugle droite (16', 19') dans le cas d'un clignotant gauche activé, et la région aveugle droite (16', 19') étant mise en surbrillance par rapport à la région aveugle gauche (14', 18') dans le cas d'un clignotant droit activé.

13. Procédé selon la revendication 11 ou 12,
**caractérisé en ce que**
l'image (30) d'ensemble comprend une région aveugle (18', 19') située derrière l'image (1') de véhicule, pour laquelle des données d'image ne sont pas présentes, la représentation de cette région aveugle (18', 19') subissant une variation suite à l'activation d'un feu de freinage du véhicule (1) à moteur.

14. Système (2) d'assistance à la conduite servant à afficher des images (30), pour un véhicule (1) à moteur, comprenant :
- au moins une caméra (5a à 5d) servant à capturer une image d'un environnement (10 à 13) du véhicule (1) à moteur,
- un moyen de calcul, dans lequel est stockée une image (1') de véhicule d'au moins une région du véhicule (1) à moteur, et qui est prévu pour produire un image (30) d'ensemble à partir de l'image (1') de véhicule et l'image de l'environnement (10 à 13), qui comprend au moins une région aveugle (14', 16', 18', 19') associée à l'environnement (10 à 13), pour laquelle des données d'image ne sont pas présentes, et
- un moyen (3) d'affichage servant à afficher l'image (30) d'ensemble,
**caractérisé en ce que**
le moyen de calcul est prévu pour mettre en surbrillance la région aveugle (14', 16', 18', 19') dans l'image (30) d'ensemble en fonction de la présence d'un objet détecté dans ladite région aveugle (14', 16', 18', 19') d'après des données de capteur d'au moins un capteur (22 à 27, 28, 29) dudit véhicule (1) à moteur différent de ladite caméra (5a à 5d).

15. Véhicule (1) à moteur comprenant un système (2) d'assistance à la conduite selon la revendication 14.
